# EUROPÄISCHE PATENTSCHRIFT

(11) **EP 0 301 654 B1**
(45) Veröffentlichungstag und Bekanntmachung des Hinweises auf die Patenterteilung: **31.03.1993**
(21) Anmeldenummer: 88201567.0
(22) Anmeldetag: 20.07.1988
(51) Int. Cl.: G11B 5/133, G11B 5/53, G11B 5/127

(54) **Magnetkopf**
Magnetic head
Tête magnétique

(30) Priorität: 30.07.1987 AT 1934/87
(43) Veröffentlichungstag der Anmeldung: 01.02.1989
(73) Patentinhaber: Philips Electronics N.V., 5621 BA Eindhoven (NL)
(72) Erfinder: Tuma, Wolfgang, NL-5656 AA Eindhoven (NL); Traxlmayr, Ulrich, NL-5656 AA Eindhoven (NL); Kodym, Walter, NL-5656 AA Eindhoven (NL); Lorteije, Jean Hubertus Josef, NL-5656 AA Eindhoven (NL); Den Bakker, Roeland, NL-5656 AA Eindhoven (NL)
(74) Vertreter: Schrijnemaekers, Hubert Joannes Maria

(56) Entgegenhaltungen:
- EP-A- 0 060 358
- GB-A- 2 151 835
- US-A- 4 091 428
- US-A- 4 251 838
- US-A- 4 528 652
- PATENT ABSTRACTS OF JAPAN Band 4, Nr. 131 (P-27) (613) 13091980 ; & JP - A - 55 84021

## Beschreibung

Die Erfindung betrifft einen Magnetkopf, der zwei miteinander vereinigte plättchenförmige Kernteile aus Ferrit aufweist, die an einer Schmalseite eine Lauffläche für einen Aufzeichnungsträger bilden, in die ein von den beiden Kernteilen begrenzter Nutzspalt mündet und bei dem mindestens auf eine seiner beiden, durch die beiden Kernteile gebildeten, quer zur Lauffläche und zum Nutzspalt verlaufenden Seitenflächen mindestens teilweise ein Dämpfungsmaterial aufgebracht ist. Bei einem derartigen aus der JP-OS 55-84021 bekannten Magnetkopf besteht das Dämpfungsmaterial aus einem porösen und anorganischen Material. Ein solches Dämpfungsmaterial wird verwendet, um die im Ausgangssignal eines Magnetkopfes auftretenden Störsignale zu verringern, die beim Darübergleiten eines Aufzeichnungszträgers, beispielsweise eines Magnetbandes, über die Lauffläche des Magnetkopfes entstehen. In der angloamerikanischen Literatur werden solche Störsignale auch als "Sliding Noise" oder "Rubbing Noise" bezeichnet. In der Praxis hat sich gezeigt, daß das in der JP-OS 55-84021 angegebene Dämpfungsmaterial zwar derartige Störsignale herabsetzt, dies aber in einem nicht zufriedenstellenden Ausmaß.

Die Erfindung hat sich zum Ziel gesetzt, das Auftreten von Störsignalen, die beim Darübergleiten eines Aufzeichnungsträgers über die Lauffläche eines Magnetkopfes entstehen können, möglichst vollständig zu vermeiden. Hiezu ist die Erfindung dadurch gekennzeichnet, daß das Dämpfungsmaterial ein mit weniger als 30 Vol% Füllstoff gefülltes Kunstharz ist, wobei der Füllstoff eine Dichte größer als 10x10³kg/m³ aufweist, daß der Gewichtsanteil des Füllstoffes mindestens 74Gew% beträgt und daß die Dichte des Dämpfungsmaterials größer als 4x10³kg/m³ ist und sein Elastizitätsmodul im Bereich zwischen 10⁷ und 10⁹Pa liegt. Auf diese Weise können die beim Darübergleiten eines Aufzeichnungsträgers über die Lauffläche des Magnetkopfes entstehenden Störsignale fast vollkommen vermieden werden. Dies ist auf die besondere Wahl der Mischungsverhältnisse des Kunstharzes mit dem eine große Dichte aufweisenden Füllstoff zurückzuführen, wodurch ein Dämpfungsmaterial erhalten wird, das selbst große Dichte aufweist, in dem aber die in das Kunstharz eingebetteten Partikel des Füllstoffes trotzdem noch ausreichende gegenseitige Bewegungsfreiheit haben, um im Zusammenwirken mit dem Kunstharz eine gute Dämpfung zu ergeben. Durch die spezielle Wahl des Elastizitätsmoduls des Dämpfungsmaterials wird außerdem erreicht, daß die magnetischen Eigenschaften der aus Ferrit bestehenden Kernteile, zufolge von im Ferrit entstehenden Spannungen beim Aushärten des Dämpfungsmaterials, nicht nachteilig beeinflußt werden, so daß der Magnetkopf unveränderte elektrische Signaleigenschaften aufweist.

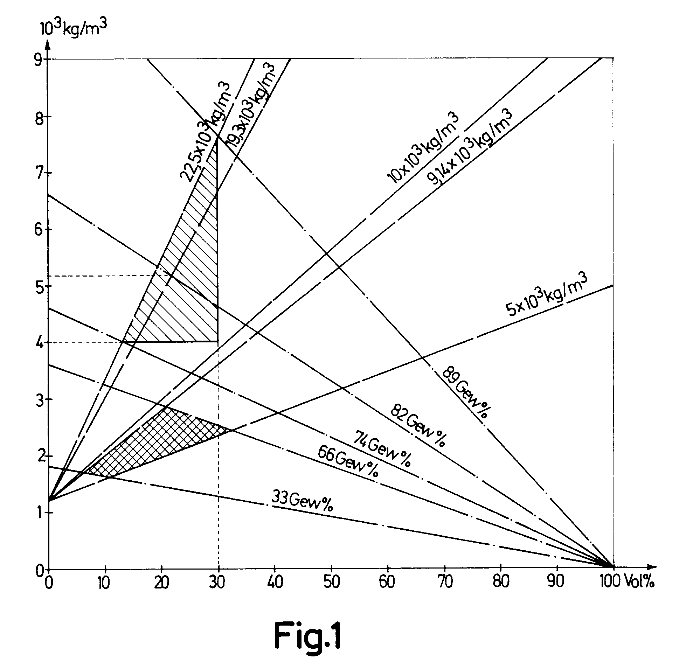

Es sei an dieser Stelle erwähnt, daß aus der JP-OS 57-222.643 eine unter anderem auch die beim Darübergleiten eines Aufzeichnungsträgers über die Lauffläche eines Magnetkopfes entstehenden Störsignale herabsetzende Vergußmasse für die in einem Gehäuse untergebrachten Kernteile eines Magnetkopfes bekannt ist, die aus einem Epoxidharz besteht, das mit einem Füllstoff versehen ist, der eine Dichte größer als 5x10³kg/m³ haben soll, wobei in den Beispielen als größter Dichtewert 9,14x10³kg/m³ und als kleinster Dichtewert 6,95x10³kg/m³ angegeben ist. Für das Mischungsverhältnis mit dem Füllstoff werden dabei für den Füllstoff 50 bis 200Pts.Wt. auf 100Pts.Wt. des Epoxidharzes angegeben, was einem Gewichtsanteil des Füllstoffes zwischen 33 und 66Gew% entspricht. Bereichnet man daraus die sich ergebenden Dichtewerte der Vergußmasse selbst, so erhält man dafür Werte zwischen 1,6x10³ und 2,9x10³kg/m³, also relativ kleine Dichtewerte. Die diesbezüglichen Verhältnisse sind im in Fig.1 dargestellten Diagramm angegeben, wo der sich aus den angeführten Beispielen ergebende Bereich der Dichtewerte der Vergußmasse durch eine Doppelschraffur gekennzeichnet ist. Aus diesem Diagramm ist auch ersichtlich, daß man bei dem angegebenen Mischungsverhältnis für die Vergußmasse, selbst dann, wenn man einen Füllstoff mit größerer als der in den Beispielen angegebenen Dichte wählen würde, nur Dichtewerte für die Vergußmasse erreichen könnte, die maximal bei etwa 3,2x10³kg/m³ liegen würden. Dementsprechend gering ist auch die erzielbare Dämpfung mit derartigen Vergußmassen. Angaben über den Elastizitätsmodul derartiger Vergußmassen lassen sich dieser JP-OS 57-222.643 nicht entnehmen. Demgegenüber wird erfindungsgemäß ein Dämpfungsmaterial mit einer Dichte größer als 4x10³kg/m³ verwendet, das dann mindestens auf eine der beiden Seitenflächen des Magnetkopfes mindestens teilweise aufgebracht wird. Auf diese Weise werden die beim Darübergleiten eines Aufzeichnungsträgers über die Lauffläche eines Magnetkopfes entstrehenden Störsignale besonders gut unterdrückt.

Als Füllstoffe mit Dichtewerten größer als 10x10³kg/m³ kommen verschiedene Materialien oder Legierungen in Frage, wie den einschlägigen Handbüchern zu entnehmen ist. Als besonders vorteilhaft hat sich erwiesen, wenn das Dämpfungsmaterial als Füllstoff Wolfram enthält. Auf diese Weise ist das Dämpfungsmaterial einfach und preisgünstig herstellbar, wobei durch die relativ große Dichte von Wolfram mit 19,3x10³kg/m³ sich unter den angegebenen Mischungsverhältnissen für das Dämpfungsmaterial Dichtewerte bis 6,6x10³kg/m³ erreichen lassen.

In diesem Zusammenhang ist zu erwähnen, daß ein Material, das aus einem mit Wolfram gefüllten Harz besteht, an sich aus der US-PS 4 528 652 bekannt ist, das aber im Zusammenhang mit Ultraschallwandlern zur Absorption von Ultraschallwellen verwendet wird, ohne dabei die Schwingungsfähigkeit des Wandlers zu verringern oder zu bedämpfen, was durch eine entsprechende Wahl der akustischen Impedanz geschieht. Eine andere Anwendungsmöglichkeit für dieses Material, nämlich wie im erfindungsgemäßen Fall im Zusammenhang mit Magnetköpfen und einer Bedämpfung von deren mechanischen Schwingungen, läßt sich der US-PS 4 528 652 nicht entnehmen.

Als vorteilhaft hat sich erwiesen, wenn die Dichte des Dämpfungsmaterials in der Größenordnung von 5,2x10³kg/cm³ gewählt ist. Bei einer derartigen Dichte des Dämpfungsmaterials läßt sich eine gleichmäßige Verteilung der Partikel des Füllstoffes im Kunstharz und eine einwandfreie Ummantelung derselben durch das Kunstharz erreichen, wobei die einzelen Partikel auch noch eine ausreichende gegenseitige Bewegungsfreiheit haben, um im Zusammenwirken mit dem Kunstharz eine gute Dämpfung zu ergeben. Hiebei sollen im vorliegenden Zusammenhang unter Größenordnung Werte von ±10% verstanden werden.

Weiters hat sich als vorteilhaft erwiesen, wenn der Elastizitätsmodul des Dämpfungsmaterials in der Größenordnung von 3x10⁸Pa gewählt ist. Bei einem derart gewählten Elastizitätsmodul, was in üblicher Weise durch Zugabe eines Weichmachers in das Kunstharz geschieht, entstehen beim Aushärten des Dämpfungsmaterials keine zu großen Spannungen im Ferrit der Kernteile, wodurch die elektrischen Signaleigenschaften des Magnetkopfes nicht nachteilig verändert werden. Hier sollen unter Größenordnung Werte von ±50% verstanden werden.

Als vorteilhaft hat sich auch erwiesen, wenn das Dämpfungsmaterial in Form lokal begrenzter Stellen, unter Freilassung von Zwischenräumen zwischen den Stellen, aufgebracht ist. Durch ein derart unterteilt aufgebrachtes Dämpfungsmaterial werden ebenfalls beim Aushärten des Dämpfungsmaterials entstehende Spannungen im Ferrit der Kernteile herabgesetzt beziehungsweise vermieden, wodurch, wie bereits erwähnt, die elektrischen Signaleigenschaften des Magnetkopfes nicht nachteilig verändert werden.

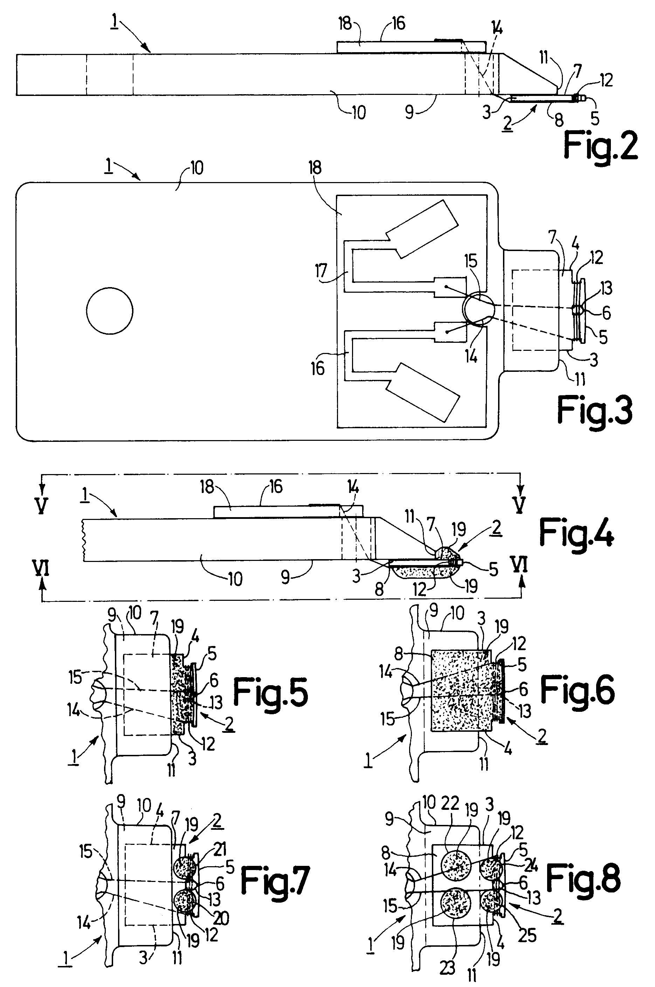

Die Erfindung wird im folgenden anhand der Zeichnungen, in welchen Ausführungsbeispiele der Erfindung dargestellt sind, auf die sie jedoch nicht beschränkt sein soll, näher erläutert. Fig.1 zeigt ein Diagramm, über die sich ergebenden Zusammenhänge bei verschiedenen Mischungsverhältnissen und Zusammensetzungen des Dämpfungsmaterials. Fig.2 zeigt in Seitenansicht eine übliche Magnetkopfbaueinheit mit einem auf einem Träger angeordneten Magnetkopf. Fig.3 zeigt die Magnetkopfbaueinheit gemäß Fig.2 in Draufsicht. Fig.4 zeigt in der Darstellungsweise von Fig.2 eine Magnetkopfbaueinheit, bei der auf den Magnetkopf erfindungsgemäß Dämpfungsmaterial aufgebracht ist, und zwar im vorliegenden Fall auf die gesamten frei zugänglichen Flächenabschnitte beider Seitenflächen des Magnetkopfes. Fig.5 zeigt einen Ausschnitt der Magnetkopfbaueinheit nach Fig.4 in Draufsicht nach der Linie V-V in Fig.4. Fig.6 zeigt einen Ausschnitt der Magnetkopfbaueinheit nach Fig.4 in Unteransicht gemäß der Linie VI-VI in Fig.4. Fig.7 zeigt in der Darstellungsweise von Fig.5 einen Ausschnitt einer Magnetkopfbaueinheit, bei der auf die frei zugänglichen Flächenabschnitte beider Seitenflächen des Magnetkopfes Dämpfungsmaterial nur an lokal begrenzten Stellen aufgebracht ist. Fig.8 zeigt in der Darstellungsweise von Fig.6 in Unteransicht die in Fig.7 in Draufsicht dargestellte Magnetkopfbaueinheit.

Die Figuren 2 und 3 zeigen eine übliche Magnetkopfbaueinheit 1, die beispielsweise zur Anbringung auf einer rotierend antreibbaren Trommel und Abtastung eines Magnetbandes in schräg verlaufenden Spuren geeignet ist. Der Magnetkopf 2 besteht hiebei aus zwei miteinander vereinigten plättchenförmigen Kernteilen 3 und 4 aus Ferrit, die an einer Schmalseite eine Lauffläche 5 für ein Magnetband bilden, in die ein von den beiden Kernteilen 3 und 4 begrenzter Nutzspalt 6 mündet. Ein solcher Magnetkopf weist zwei quer zur Lauffläche 5 und zum Nutzspalt 6 verlaufende Seitenflächen 7 und 8 auf. Mit einem Teil der Seitenfläche 7 ist der Magnetkopf 2 auf einer Seitenfläche 9 eines Trägers 10, beispielsweise durch Kleben, angebracht, so daß er mit seinem den Nutzspalt 6 aufweisenden aktiven Teil über das freie Ende 11 des Trägers 10 hinausragt. Anschließend an den Bereich des Nutzspaltes 6 ist der Magnetkopf in üblicher Weise mit einer Spulenwicklung 12 versehen, die durch ein in den beiden Kernteilen 3 und 4 vorgesehenes Spulenfenster 13 hindurchgeführt ist und deren beide Enden 14 und 15 zu Anschlußleitungen 16 und 17 geführt sind, die als gedruckte Schaltung auf einer Leiterplatte 18 ausgebildet sind, die ihrerseits am Träger 10 angeordnet ist.

Wenn im Betrieb einer solchen Magnetkopfbaueinheit ein Magnetband über die Lauffläche 5 des Magnetkopfes 2 gleitet, entstehen bekanntlich im Ausgangssignal des Magnetkopfes Störsignale, die auf mechanische Schwingungen des Magnetkopfes zurückzuführen sind. Um solche Störsignale herabzusetzen, kann auf mindestens eine Seitenfläche des Magnetkopfes ein Dämpfungsmaterial aufgebracht werden, das dann mechanische Schwingungen des Magnetkopfes bedämpft.

Es hat sich nun gezeigt, daß die Bedämpfung solcher mechanischer Schwingungen des Magnetkopfes 2 besonders wirkungsvoll ist, wenn ein Dämpfungsmaterial mit größerer Dichte verwendet wird. Hiezu wird als Dämpfungsmaterial ein mit weniger als 30Vol% Füllstoff gefülltes Kunstharz verwendet, wobei der Füllstoff eine Dichte größer als 10x10³kg/m³ aufweist und der Gewichtsanteil des Füllstoffes mindestens 74Gew% beträgt, wobei die Dichte des Dämpfungsmaterials größer als 4x10³kg/m³ ist. Als Kunstharz kann hiebei beispielsweise ein Epoxidharz verwendet werden, wie es von der Firma Ciba-Geigy unter dem Handelsnamen "Araldit F" erhältlich ist, das eine Dichte von etwa 1,2x10³kg/m³ hat. Je nachdem welcher Füllstoff mit einer Dichte größer als 10x10³kg/m³ verwendet wird, wozu beispielsweise Blei oder Tantal zählen, lassen sich bei den angegebenen Mischungsverhältnissen Dichtewerte des Dämpfungsmaterials erreichen, die größer als 3,4x10³kg/m³ sind. In der Praxis hat sich gezeigt, daß eine gute Unterdrückung der Störsignale sich dann ergibt, wenn die Dichte des Dämpfungsmaterials größer als 4x10³kg/m³ ist. Durch die angegebenen Mischungsverhältnisse des Kunstharzes mit dem eine Dichte größer als 10x10³kg/m³ aufweisenden Füllstoff ist auch erreicht, daß die in das Kunstharz eingebetteten Partikel des Füllstoffes eine ausreichende gegenseitige Bewegungsfreiheit haben, wodurch sie im Zusammenwirken mit dem Kunstharz eine gute Dämpfung ergeben.

Die vorliegenden Verhältnisse zeigt das in Fig.1 angegebene Diagramm. In diesem Diagramm ist auf der Ordinate die Dichte des Dämpfungsmaterials in 10³kg/m³ und auf der Abszisse der Volumsanteil des Füllstoffes im Dämpfungsmaterial in Vol% angegeben. Die in das Diagramm eingetragenen strichlierten Linien entsprechen jeweils einer bestimmten Dichte des verwendeten Füllstoffes die in 10³kg/m³ angegeben ist und die strichpunktiert eingetragenen Linien entsprechen jeweils einem bestimmten Gewichtsanteil des Füllstoffes in der Dämpfungsmasse in Gew%. Die Dichte des Füllstoffes ist nach oben hin durch die Materialien mit größter Dichte von 22,5x10³kg/m³ begrenzt, wie sie Osmium oder etwa Iridium aufweisen. Mit den vorstehend angegebenen Mischungsverhältnissen ergibt sich damit ein Bereich der wählbaren Dichte des Dämpfungsmaterials, der im Diagramm mit einer einfachen Schraffur angegeben ist.

Als besonders vorteilhaft hat sich erwiesen, wenn das Dämpfungsmaterial als Füllstoff Wolfram enthält, das eine Dichte von 19,3x10³kg/m³ hat, wodurch sich unter den vorstehend angeführten Voraussetzungen Dichtewerte für das Dämpfungsmaterial bis 6,6x10³kg/m³ erreichen lassen, wie dies ebenfalls dem in Fig.1 angegebenen Diagramm zu entnehmen ist. Abgesehen von den großen für die Dämpfungsmasse erreichbaren Dichtewerten ist ein solches Dämpfungsmaterial einfach und preisgünstig herzustellen. Im Hinblick auf eine besonders gute Dämpfung hat sich hiebei weiters als besonders vorteilhaft erwiesen, wenn der Gewichtsanteil von Wolfram mit etwa 82Gew% gewählt wird, womit eine Dichte für das Dämpfungsmaterial in der Größenordnung von 5,2x10³kg/m³ erhalten wird. Die besonders gute Dämpfungswirkung ist dabei darauf zurückzuführen, daß bei einer derartigen Dichte des Dämpfungsmaterials sich eine gleichmäßige Verteilung der Partikel des Füllstoffes im Kunstharz und eine einwandfreie Ummantelung derselben durch das Kunstharz erreichen läßt, wobei die einzelnen Partikel auch noch eine ausreichende gegenseitige Bewegungsfreiheit haben, um im Zusammenwirken mit dem Kunstharz die erwähnte besonders gute Dämpfung zu ergeben.

Bei dem in den Figuren 4, 5 und 6 gezeigten Ausführungsbeispiel wird nun auf die frei zugänglichen Flächenabschnitte beider Seitenflächen 7 und 8 des Magnetkopfes 2, wobei hier seine Seitenfläche 8 vollständig frei zugänglich ist, ein wie im vorstehenden angegebenes Dämpfungsmaterial 19 aufgebracht. Im vorliegenden Fall werden diese Flächenabschnitte vollständig mit dem Dämpfungsmaterial 19 bedeckt. An sich wäre es natürlich auch möglich, auf diese Flächenabschnitte nur teilweise Dämpfungsmaterial aufzubringen oder auch das Dämpfungsmaterial nur auf eine der beiden Seitenflächen des Magnetkopfes aufzubringen. Hiezu wird das Dämpfungsmaterial 19 im flüssigen Zustand auf die betreffenden Flächenabschnitte aufgebracht und anschließend entsprechend den Anforderungen für das verwendete Kunstharz ausgehärtet, was auch als Backen bezeichnet wird. In diesem Zusammenhang hat sich als wesentlich erwiesen, daß bei dem Aushärten des Dämpfungsmaterials keine, beziehungsweise keine zu großen Spannungen im Ferrit der Kernteile 3 und 4 entstehen. Derartige Spannungen beeinflussen nämlich die magnetischen Eigenschaften des Ferrites und damit die elektrischen Signaleigenschaften des gesamten Magnetkopfes. Um derartige unerwünschte Einflüsse zu vermeiden, hat sich als wesentlich erwiesen, daß der Elastizitätsmodul des Dämpfungsmaterials im Bereich zwischen 10⁷ und 10⁹Pa liegt, wobei sich als besonders vorteilhaft erwiesen hat, wenn der Elastizitätsmodul in der Größenordnung von 3x10⁸Pa gewählt wird. Die Wahl eines derartigen Elastizitätsmoduls des Dämpfungsmaterials geschieht in üblicher Weise durch Zugabe eines Weichmachers in das Kunstharz. Auf diese Weise werden die elektrischen Signaleigenschaften des Magnetkopfes nicht nachteilig beeinflußt, trotzdem wird aber eine gute Dämpfung der mechanischen Schwingungen des Magnetkopfes erreicht, so daß beim Darübergleiten eines Magnetbandes über die Lauffläche 5 des Magnetkopfes 2 praktisch keine Störsignale im Ausgangssignal des Magnetkopfes auftreten.

Zur Vermeidung von Spannungen im Ferrit der beiden Kernteile 3 und 4 des Magnetkopfes 2 hat sich auch als vorteilhaft erwiesen, wenn das Dämpfungsmaterial 19 nur auf lokal begrenzte Stellen der frei zugänglichen Flächenabschnitte der Seitenflächen 7 und 8 des Magnetkopfes, unter Freilassung von Zwischenräumen zwischen den Stellen, aufgebracht wird, wie dies im Ausführungsbeispiel nach den Figuren 7 und 8 gezeigt ist. Im vorliegenden Fall ist auf zwei Stellen 20 und 21 des frei zugänglichen Flächenabschnittes der Seitenfläche 7 und auf vier Stellen 22, 23, 24 und 25 der ganzen frei zugänglichen Seitenfläche 8 Dämpfungsmaterial 19 aufgebracht, wobei die übrigen Flächenabschnitte frei von Dämpfungsmaterial bleiben. Selbstverständlich könnte die Anzahl der Stellen, auf die Dämpfungsmaterial aufgebracht wird, und ihre örtliche Lage auch noch variiert werden. Im vorliegenden Fall ist die Begrenzung der einzelnen Stellen, auf die Dämpfungsmaterial aufgebracht ist, kreisförmig, was sich dann ergibt, wenn das Dämpfungsmaterial tröpfchenförmig aufgebracht wird. Es wäre aber auch ohne weiteres möglich, daß das Dämpfungsmaterial streifenförmig aufgebracht wird oder in einem anderen Muster.

Zu erwähnen ist, daß selbstverständlich auch noch andere Ausbildungsformen der ganzen Magnetkopfbaueinheit als der hier beschriebenen möglich sind. So könnte der Träger, an dem der Magnetkopf angebracht wird, unmittelbar eine rotierend antreibbare Trommel sein. Ebenso könnten die erfindungsgemäßen Maßnahmen bei einem Magnetkopf angewandt werden, der selbst stillsteht oder radial gegenüber einem scheibenförmigen Aufzeichnungsträger bewegt wird. Wie ersichtlich, besteht eine Reihe von Abwandlungsmöglichkeiten der im vorstehenden beschriebenen Ausführungsbeispiele, ohne daß dabei der Rahmen der Erfindung verlassen wird. In diesem Zusammenhang ist auch noch zu erwähnen, daß das Dämpfungsmaterial auf mindestens eine der beiden Seitenflächen des Magnetkopfes auch aufgebracht werden kann, bevor der Magnetkopf auf einem Träger montiert wird. Ebenso kann das Dämpfungsmaterial auf mindestens eine der beiden Seitenflächen des Magnetkopfes auch aufgebracht werden, bevor seine beiden Kernteile mit einer Spulenwicklung versehen werden.

## Patentansprüche

1. Magnetkopf, der zwei miteinander vereinigte plättchenförmige Kernteile aus Ferrit aufweist, die an einer Schmalseite eine Lauffläche für einen Aufzeichnungsträger bilden, in die ein von den beiden Kernteilen begrenzter Nutzspalt mündet und bei dem mindestens auf eine seiner beiden, durch die beiden Kernteile gebildeten, quer zur Lauffläche und zum Nutzspalt verlaufenden Seitenflächen mindestens teilweise ein Dämpfungsmaterial aufgebracht ist, dadurch gekennzeichnet, daß das Dämpfungsmaterial ein mit weniger als 30Vol% Füllstoff gefülltes Kunstharz ist, wobei der Füllstoff eine Dichte größer als 10x10³kg/m³ aufweist, daß der Gewichtsanteil des Füllstoffes mindestens 74Gew% beträgt und daß die Dichte des Dämpfungsmaterials größer als 4x10³kg/m³ ist und sein Elastizitätsmodul im Bereich zwischen 10⁷ und 10⁹Pa liegt.

2. Magnetkopf nach Anspruch 1, dadurch gekennzeichnet, daß das Dämpfungsmaterial als Füllstoff Wolfram enthält.

3. Magnetkopf nach Anspruch 1 oder 2, dadurch gekennzeichnet, daß die Dichte des Dämpfungsmaterials in der Größenordnung von 5,2x10³kg/m³ gewählt ist.

4. Magnetkopf nach einem den vorhergehenden Ansprüche, dadurch gekennzeichnet, daß der Elastizitätsmodul des Dämpfungsmaterials in der Größenordnung von 3x10⁸Pa gewählt ist.

5. Magnetkopf nach einem der vorhergehenden Ansprüche, dadurch gekennzeichnet, daß das Dämpfungsmaterial in Form lokal begrenzter Stellen, unter Freilassung von Zwischenräumen zwischen den Stellen, aufgebracht ist.

## Claims

1. A magnetic head comprising two combined plate-shaped ferrite core limbs constituting on a narrow side a tape contact face for a record carrier in which a gap bounded by the two core limbs terminates, a damping material being at least partly provided on at least one of the two side faces constituted by said two core limbs and extending transversely to the tape contact face and to the gap, characterized in that the damping material is a synthetic resin filled with less than 30% by volume of filler, which filler has a density of more than 10 x 10³ kg/m³, in that the part by weight of the filler is at least 74% by weight and in that the density of the damping material is larger than 4 x 10³ kg/m³ and its modulus of elasticity ranges between 10⁷ and 10⁹ Pa.

2. A magnetic head as claimed in Claim 1, characterized in that the damping material comprises tungsten as a filler.

3. A magnetic head as claimed in Claim 1 or 2, characterized in that the density of the damping material is chosen to be of the order of 5.2 x 10³ kg/m³.

4. A magnetic head as claimed in any one of the preceding Claims, characterized in that the modulus of elasticity of the damping material is chosen to be of the order of 3 x 10⁸ Pa.

5. A magnetic head as claimed in any one of the preceding Claims, characterized in that the damping material is provided in the form of locally bounded areas while leaving intermediate spaces between the areas.

## Revendications

1. Tête magnétique présentant deux parties de noyau de ferrite en forme de lamelle réunies l'une à l'autre et formant, sur un petit côté, une surface de contact pour un support d'enregistrement sur laquelle débouche un entrefer limité par les deux parties de noyau, tête magnétique dont au moins l'une des deux faces latérales, formées par les deux parties de noyau et s'étendant perpendiculairement à la surface de contact et à l'entrefer, est au moins partiellement recouverte d'un matériau d'amortissement, caractérisée en ce que le matériau d'amortissement est une résine synthétique remplie à moins de 30% en volume d'une matière de remplissage, la matière de remplissage présentant une densité supérieure à 10x10³ kg/m³, en ce que le pourcentage pondéral de la matière de remplissage est d'au moins 24% en poids et en ce que la densité du matériau d'amortissement est supérieure à 4x10³ kg/m³ et son module d'élasticité est compris entre 10⁷ Pa et 10⁹ Pa.

2. Tête magnétique selon la revendication 1, caractérisée en ce que le matériau d'amortissement comporte comme matière de remplissage du tungstène.

3. Tête magnétique selon la revendication 1 ou 2, caractérisé en ce que la densité du matériau d'amortissement est choisie dans l'ordre de grandeur de 5,2x10³ kg/m³.

4. Tête magnétique selon l'une quelconque des revendications précédentes, caractérisée en ce que le module d'élasticité du matériau d'amortissement est choisi dans l'ordre de grandeur de 3x10⁸Pa.

5. Tête magnétique selon l'une quelconque des revendications précédentes, caractérisée en ce que le matériau d'amortissement est prévu sous la forme de plages localisées, séparées par des intervalles découverts.
